# EUROPÄISCHE PATENTSCHRIFT

(11) **EP 0 933 829 B1**
(45) Veröffentlichungstag und Bekanntmachung des Hinweises auf die Patenterteilung: **06.08.2003**
(21) Anmeldenummer: 98121805.0
(22) Anmeldetag: 17.11.1998
(51) Int. Cl.: H01M 10/50, H01M 10/44, H01M 10/48

(54) **Verfahren zur Verbesserung der Lade- und Entladefähigkeit von Akkumulatoren**
Process for improving the charging and discharging capacity of a battery
Procédé pour améliorer la capacité de charge et de décharge d'un accumulateur

(30) Priorität: 29.01.1998 DE 19803312
(43) Veröffentlichungstag der Anmeldung: 04.08.1999
(73) Patentinhaber: VB Autobatterie GmbH, 30419 Hannover (DE)
(72) Erfinder: Meissner, Eberhard Dr., 65719 Hofheim (DE)
(74) Vertreter: Lins, Edgar, Dipl.-Phys. Dr.jur.

(56) Entgegenhaltungen:
- WO-A-93/13568
- DE-A- 3 620 041
- DE-U- 9 012 327
- FR-A- 2 718 888
- GB-A- 2 161 317
- US-A- 5 362 942
- US-A- 5 795 664
- PATENT ABSTRACTS OF JAPAN vol. 010, no. 001 (E-371), 7. Januar 1986 & JP 60 167281 A (HIDEO MASUBUCHI), 30. August 1985

## Beschreibung

Die Erfindung betrifft ein Verfahren zur Verbesserung der Lade- und Entladefähigkeit von Akkumulatoren bei tiefen Temperaturen.

Die Leistungsfähigkeit von elektrochemischen Energiespeichem nimmt im allgemeinen mit fallender Betriebstemperatur stark ab. Insbesondere betrifft dies die Fähigkeit, Entladeströme abgeben zu können, die bezogen auf die Kapazität des Akkumulators mindestens in der Größenordnung des einstündigen Entladestroms liegen. Um dieser prinzipiellen Eigenschaft von Akkumulatoren entgegen zu wirken, sind bereits verschiedene Lösungen vorgeschlagen worden. So ist beispielsweise bekannt, Akkumulatoren aus einer externen Energiequelle zu beheizen. Hiervon wird beispielsweise bei Akkumulatoren im militärischen Bereich Gebrauch gemacht, die im Bereitschaftsbetrieb ständig nachgeladen werden. Auch bei den in Satelliten installierten Akkumulatoren wird dieses Verfahren angewandt. Weiterhin findet das genannte Verfahren in sogenannten Hochtemperaturbatterien Verwendung, bei denen die zu einer Batterie verschalteten Akkumulatorzellen während des Ladevorgangs aus einer externen Energiequelle elektrisch beheizt werden. Es ist weiterhin bekannt, Latentwärmespeicher zu verwenden, um Akkumulatoren oberhalb einer Mindesttemperatur zu halten. Vorgeschlagen wurde bereits auch zur Erwärmung von Akkumulatoren, die in ihnen gespeicherte Energie zu nutzen. Insbesondere wird dieses Verfahren für Hochtemperaturbatterien, welche zur Elektrotraktion genutzt werden eingesetzt, da solche Batterien unterhalb einer bestimmten Minimaltemperatur nicht mehr betriebsbereit sind. Die Temperatur dieser Batterien muß deshalb stets oberhalb der systemspezifischen Minimaltemperatur gehalten werden, wobei dazu nötigenfalls auch die in der Batterie gespeicherte elektrische Energie verwendet wird.

Im Dokument DE-A 41 42 628 wird ein Verfahren und eine Vorrichtung zur Erwärmung eines Akkumulators vorgeschlagen, bei dem ein Leistungstransistor als Heizelement dient, der in der Batterie angeordnet ist und temperaturgesteuert betrieben wird. Die Beheizung der Batterie erfolgt in Abhängigkeit von der Batterietemperatur und der Batteriespannung, wobei ein unterer Grenzwert für die Batteriespannung definiert ist, ab dem keine Erwärmung mehr vorgenommen wird. Um ein unnötiges Erwärmen der Batterie aus ihrem eigenen Energievorrat zu vermeiden, ist eine Triggerschaltung vorgesehen. Alternativ zu der vorgeschlagenen Schaltung bestehend aus einem Temperaturfühler und einem Leistungstransistor kann auch ein PTC-Widerstand In Verbindung mit einer Triggerschaltung eingesetzt werden.

In der WO 93/13568 ist eine Batterieheizvorrichtung beschrieben, um die Verbesserung der Stromabgabe einer aufladbaren Batterie bei tiefen Außentemperaturen zu verbessern. Die Batterie wird dann aufgeheizt, wenn die Batterietemperatur unterhalb eines vorgegebene Temperatursollwertes liegt und die Batteriespannung größer als ein unterer Schwellenwert und kleiner als ein oberer Schwellenwert ist.

In dem deutschen Gebrauchsmuster G 90 12327 U1 ist eine elektronische spannungs- und temperaturgeregelte Batterieheizung beschrieben. Die Batterieheizung wird bei einer Temperatur von 18° und 5° mit unterschiedlicher Stromstärke geregelt. Zudem wird die Heizung nur dann eingeschaltet, wenn die Batteriespannung unter Last der Heizung eine Batterieunterspannung über- und eine Batterieüberspannung unterschreitet.

Mit den beschriebenen Batterieheizungen ist es jedoch nicht möglich, eine angestrebte Batterieeigenschaft, nämlich die Belastbarkeit der Batterie in Entlade- und Laderichtung zu erzielen.

Die Erfindung hat sich die Aufgabe gestellt, ein Verfahren anzugeben, das die Erwärmung eines Akkumulators aus seinem eigenem Energievorrat in möglichst kurzer Zeit gestattet, ohne daß dadurch Schädigungen des inneren Aufbaus des Akkumulators auftreten.

Erfindungsgemäß wird die Aufgabe durch ein Verfahren gelöst, wie es in Anspruch 1 angegeben ist.

Das erfindungsgemäße Verfahren berücksichtigt insbesondere die Art der im Akkumulator auftretenden elektrochemischen Reaktionen. Zur Erwärmung des Akkumulators dient sowohl ein von ihm gespeistes Heizelement als auch die beim Stromfluß durch die inneren Widerstände des Akkumulators entstehende Wärmemenge. Dadurch wird die gesamte, dem Akkumulator entnommene elektrische Energie in Wärme umgesetzt und nahezu vollständig zur Erwärmung des Akkumulators verwendet. Erfindungsgemäß wird die Größe des elektrischen Widerstandes des externen Heizelementes in der Weise gewählt, daß der Akkumulator eine solche Leistung abgibt, die zu einer schnellen Erwärmung des Akkumulators führt, ohne daß jedoch eine Schädigung des inneren Aufbaus des Akkumulators eintritt.

Die Erwärmung eines Akkumulators aus dem in ihm gespeicherten Energievorrat ist um so sinnvoller, je höher die spezifische Energiedichte (Wh/kg) im Verhältnis zu der spezifischen Wärmekapazität (Wh/kg/grad) ist. Lithium-lonen-Akkumulatoren weisen eine hohe Energiedichte auf und können im Bereich von ca. -50°C bis +100°C betrieben werden. Ihre Energiedichte liegt im Bereich von 80 bis 180 Wh/kg und ihre spezifische Wärme bei etwa 1 kJ/kg/grad. Der Energieinhalt eines Lithium-Ionen-Akkumulators reicht deshalb aus, um den Akkumulator um mehrere 100° zu erwärmen.

Während es bei den genannten Llthium-lonen-Akkumulatoren durchaus sinnvoll ist, einen Teil des Energieinhalts zur Erwärmung des Akkumulators heranzuziehen, damit dem erwärmten Akkumulator eine höhere Leistung entnommen werden kann, ist ein solches Vorgehen z.B. bei einem Bleiakkumulator wenig sinnvoll. Das Verhältnis von Wärmekapazität des Bleiakkumulators zu dessen Energiedichte ist für ein solches Verfahren wenig geeignet.

Eine möglichst schnelle Erwärmung wird theoretisch erreicht, wenn der Akkumulator zeitweise kurzgeschlossen wird, da dabei die gesamte freigesetzte elektrische Energie an dem inneren Widerstand des Akkumulators in Wärme umgewandelt wird. Alternativ dazu bietet es sich auch an, die Größe des äußeren Heizwiderstandes so zu wählen, daß die Batteriespannung beim Stromfluß gerade auf den halben Wert der Ruhespannung abfällt. Dadurch wird die maximale Leistungsabgabe des Akkumulators erzielt.

Erfindungsgemäß wurde jedoch gefunden, daß eine Schädigung der Elektroden vermieden wird, wenn der Heizwiderstand, über den der Akkumulator entladen wird, größer gewählt wird als er für eine maximale Leistungsentnahme aus dem Akkumulator sein würde. Der Heizstrom wird dadurch auf einen Wert unterhalb des maximal möglichen Stromflusses begrenzt. Vorzugsweise wird nach dem erfindungsgemäßen Verfahren ein Lithium-Ionen-Akkumulator entladen, wobei eine Polarisation der negativen Elektrode um mehr als 0,8 V positiver als das Potential von metallischem Lithium vermieden wird.

Das erfindungsgemäße Verfahren gestattet es, den Entladestrom so zu begrenzen, daß die Akkumulatorenspannung nicht unter die halbe Ruhespannung fällt. Dadurch wird sichergestellt, daß an den inneren Komponenten des Akkumulators keine Leistung freigesetzt wird, die zu einer lokalen Überhitzung führen.

### Beispiel 1

Ein Lithium-Ion-Akkumulator mit einer Temperatur von -20°C soll mit einem Strom entladen werden, mit dem theoretisch der Akkumulator innerhalb einer Stunde entladen ist. Diese Leistung kann der Akkumulator jedoch erst bei einer Temperatur oberhalb von 0°C abgeben. Erfindungsgemäß wird der Lithium-Ion-Akkumulator anfänglich beispielsweise mit dem sogenannten 5stündigen Strom (C/5), d.h. mit einer theoretischen Stromstärke entladen, die nach 5 Stunden zur vollständigen Entladung des Akkumulator führen würde. Die vollständige Umsetzung dieses Stromes in Wärme bewirkt eine Temperaturerhöhung des Akkumulators von ca. 1°C pro Minute. Durch die Veränderung des Heizwiderstandes mit steigender Temperatur wird der aktuell fließende Strom so gewählt, daß die Akkumulatorenspannung stets größer als die halbe Ruhespannung bleibt. Durch die ständige Anpassung des Heizwiderstandes an die mit der Temperaturerhöhung des Akkumulators einhergehende Steigerung der Stromabgabefähigkeit des Akkumulators wird die Zeit von ca. 20 min. für die Erwärmung des Akkumulators von -20°C auf 0°C mit einem 5-stündigen Strom auf ca. 4 min. verkürzt. Der Akkumulator kann nach dieser Vorwärmzeit einen 1-stündigen Strom an externe Verbraucher abgeben. Die Anpassung der ohne Schädigung dem Akkumulator bei einer bestimmten Temperatur entnehmbaren Stromstärke wird entweder durch den Vergleich eines aktuellen Wertes mit den in einem Speicher abgelegten zugeordneten Werten ermittelt oder aktuell durch Messung der Belastungsspannung bestimmt.

### Beispiel 2

Eine Akkumulatorenbatterie, in der mehrere Einzelzellen elektrisch zusammengeschaltet sind, wird erfindungsgemäß erwärmt. Dabei erfolgt die Heizstromentnahme in der Weise, daß bei keiner der in Serie und/oder parallel geschalteten Zellen eine Elektrode ein unzulässigen Potentialwert annimmt. Erfindungsgemäß speist mindestens eine Zelle mindestens ein Heizelement, wobei die Einzelzellspannungen gemessen und der äußere Heizwiderstand so gewählt wird, daß in keiner Zelle die halbe Ruhespannung unterschritten wird.

## Patentansprüche

1. Verfahren zur Verbesserung der Lade- und Entladefähigkeit von Akkumulatoren durch Erhöhung ihrer Temperatur, wobei dazu die in ihnen gespeicherte Energie verwendet wird, **dadurch gekennzeichnet, daß**
- die Temperatur und zumindest eine den Ladezustand kennzeichnende Größe vor Beginn der Erwärmung und während der Erwärmung gemessen wird und
- der Akkumulator über ein Wärmeenergie in ihn eintragendes elektrisches Bauelement entladen wird,
wobei
- die Entladung nur durchgeführt wird, wenn die Temperatur des Akkumulators über der Erstarrungstemperatur ihres Elektrolyten liegt, und der Ladezustand ausreicht, um eine solche Erwärmung zu erzielen, die die angestrebte Belastbarkeit des Akkumulators gestattet, und
- die Entladung beendet wird, wenn entweder die angestrebte Belastbarkeit in Entlade- bzw. Laderichtung erreicht wurde
oder
der Ladezustand einen Schwellenwert unterschreitet.

2. Verfahren nach Anspruch 1, **dadurch gekennzeichnet, daß** der zur Erwärmung verwendete Strom so hoch wie möglich gewählt wird, jedoch nicht höher als der höchste vom Hersteller spezifizierte Belastungsstrom, und die Spannung unter Last vorzugsweise 25% bis 75% der unbelasteten Spannung beträgt.

3. Verfahren nach Anspruch 1 oder 2, **dadurch gekennzeichnet, daß** der zur Heizung verwendete Entladestrom bei zunehmender Akkumulatortemperatur sukzessive erhöht wird.

4. Verfahren nach einem der Ansprüche 1 bis 3, **dadurch gekennzeichnet, daß** der Akkumulator aus mehreren Zellen besteht und die in den elektrochemischen Zellen gespeicherte elektrische Energie zur Erwärmung aller oder nur eines Teils dieser Zellen verwendet wird, wenn die Zellen in unterschiedlichen Baueinheiten angeordnet sind.

5. Verfahren nach einem oder mehreren der Ansprüche 1 bis 4, **dadurch gekennzeichnet, daß** es sich bei dem Akkumulator um eine Li-lonen-Batterie handelt, und daß eine Polarisation der negativen Elektrode um mehr als 0,8 V positiver als das Potential von metallischen Lithium in der Zelle vermieden wird.

## Claims

1. Method for improving the charging and discharging capability of rechargeable batteries by increasing their temperature, with the energy which is stored in them being used for this purpose, **characterized in that**
- the temperature and at least one variable which characterizes the state of charge being measured before the start of the heating process and during the heating process, and
- the rechargeable battery being discharged via an electrical component which introduces thermal energy into it,
with
- the discharging processing being carried out only when the temperature of the rechargeable battery is above the solidification temperature of its electrolyte, and when the state of charge is sufficient in order to achieve such heating which allows the rechargeable battery to have the desired load capability, and
- the discharging process being ended when either the desired load capability is achieved in the discharging and/or charging direction,
or
the state of charge falls below a threshold value.

2. Method according to Claim 1, **characterized in that** the current which is used for heating is chosen to be as great as possible, but not greater than the maximum load current specified by the manufacturer, and the voltage on load is preferably 25% to 75% of the no-load voltage.

3. Method according to Claim 1 or 2, **characterized in that** the discharge current which is used for heating is increased successively as the rechargeable battery temperature rises.

4. Method according to one of Claims 1 to 3, **characterized in that** the rechargeable battery comprises two or more cells, and the electrical energy which is stored in the electrochemical cells is used for heating all of these cells or only some of these cells, when the cells are arranged in different units.

5. Method according to one or more of Claims 1 to 4, **characterized in that** the rechargeable battery is a Liion battery, and **in that** polarization of the negative electrode by more than 0.8 V more positively than the potential of metallic lithium in the cell is avoided.

## Revendications

1. Procédé pour améliorer la capacité de charge et de décharge d'accumulateurs par l'augmentation de leur température, dans lequel on utilise à cet effet l'énergie accumulée en eux,
**caractérisé en ce que**
- on mesure la température et au moins une grandeur caractérisant l'état de charge avant le commencement du chauffage et pendant le chauffage, et
- on décharge l'accumulateur à travers un composant électrique introduisant de l'énergie thermique dans celui-ci,
- on n'opère la décharge que lorsque la température de l'accumulateur est supérieure à la température de solidification de son électrolyte et que l'état de charge suffit pour atteindre un chauffage qui permet la puissance visée de l'accumulateur, et
- on achève la décharge lorsque soit la puissance visée a été atteinte dans le sens de la décharge ou de la charge, soit l'état de charge descend sous une valeur de seuil.

2. Procédé selon la revendication 1,
**caractérisé en ce qu'**
on choisit le courant utilisé pour le chauffage aussi élevé que possible, toutefois pas plus haut que le plus grand courant en charge spécifié par le fabricant, et la tension en charge vaut de préférence 25 % à 75 % de la tension sans charge.

3. Procédé selon la revendication 1 ou 2,
**caractérisé en ce qu'**
on augmente successivement le courant de décharge utilisé pour le chauffage lorsque la température de l'accumulateur augmente.

4. Procédé selon l'une quelconque des revendications 1 à 3,
**caractérisé en ce que**
l'accumulateur se compose de plusieurs cellules et **en ce que** l'on utilise l'énergie électrique accumulée dans les cellules électrochimiques pour le chauffage de toutes ou seulement d'une partie de ces cellules, lorsque les cellules sont disposées dans différentes unités de construction.

5. Procédé selon une ou plusieurs des revendications 1 à 4,
**caractérisé en ce que**
l'accumulateur est une batterie à ions de lithium et on évite dans la cellule une polarisation de l'électrode négative, positive de plus de 0,8 V au-dessus de potentiel du lithium métallique.
